(19) Europäisches Patentamt
European Patent Office
Office européen des brevets

(11) EP 1 034 227 B1

(12) **EUROPÄISCHE PATENTSCHRIFT**

(45) Veröffentlichungstag und Bekanntmachung des Hinweises auf die Patenterteilung:
**07.05.2003 Patentblatt 2003/19**

(21) Anmeldenummer: **98955547.9**

(22) Anmeldetag: **06.11.1998**

(51) Int Cl.7: **C09D 11/00**, B41M 5/035, C09B 67/46

(86) Internationale Anmeldenummer:
**PCT/EP98/07098**

(87) Internationale Veröffentlichungsnummer:
**WO 99/028397 (10.06.1999 Gazette 1999/23)**

(54) **FARBSTOFFZUBEREITUNGEN**

COLORANT PREPARATIONS

PREPARATIONS DE COLORANTS

(84) Benannte Vertragsstaaten:
**CH DE FR GB IT LI**

(30) Priorität: **26.11.1997 DE 19752333**

(43) Veröffentlichungstag der Anmeldung:
**13.09.2000 Patentblatt 2000/37**

(73) Patentinhaber: **BASF AKTIENGESELLSCHAFT**
**67056 Ludwigshafen (DE)**

(72) Erfinder:
- **HERRMANN, Manfred**
**D-67061 Ludwigshafen (DE)**
- **SIEGEL, Bernd**
**D-67166 Otterstadt (DE)**
- **SIEMENSMEYER, Karl**
**D-67227 Frankenthal (DE)**

(56) Entgegenhaltungen:
**EP-A- 0 013 576**
**WO-A-97/46623**
**FR-A- 2 408 681**
**GB-A- 1 527 396**

- **CHEMICAL ABSTRACTS , Bd. 10, Nr. 106, 9. März 1987, XP002094322**
- **DATABASE WPI Section Ch, Week 9344 Derwent Publications Ltd., London, GB; Class A23, AN 93-348635 XP002094320 & JP 05 255626 A (KANEBO LTD) , 5. Oktober 1993**
- **DATABASE WPI Section Ch, Week 8708 Derwent Publications Ltd., London, GB; Class A25, AN 87-054639 XP002094321 & JP 62 011780 A (MITSUBISHI CHEM IND LTD) , 20. Januar 1987**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 034 227 B1

Printed by Jouve, 75001 PARIS (FR)

## Beschreibung

Die vorliegende Erfindung betrifft neue Farbstoffzubereitungen, enthaltend, jeweils bezogen auf das Gewicht der Zubereitung, 0,1 bis 30 Gew.-% eines oder mehrerer Farbstoffe aus der Klasse der Anthrachinone oder Chinophthalone, die frei sind von ionischen Gruppen, 0,1 bis 20 Gew.-% eines Dispergiermittels auf Basis eines Arylsulfonsäure-Formaldehyd-Kondensationsprodukts, das einen Gehalt von 3 bis 50 Gew.-%, bezogen auf das Gewicht des Dispergiermittels, einer oder mehrerer aromatischen oder langkettigen aliphatischen Carbonsäuren, deren Salzen, deren Anhydriden oder Gemischen hieraus aufweist oder 0,1 bis 20 Gew.-% eines wasserlöslichen Dispergiermittels auf Basis von Verbindungen der allgemeinen Formel III oder IV,

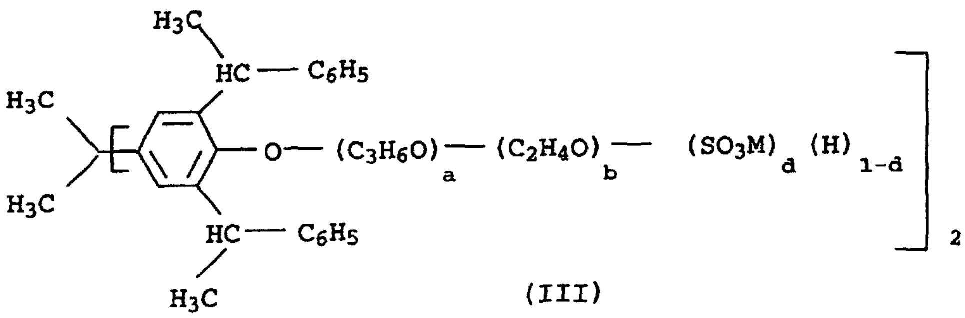

(III)

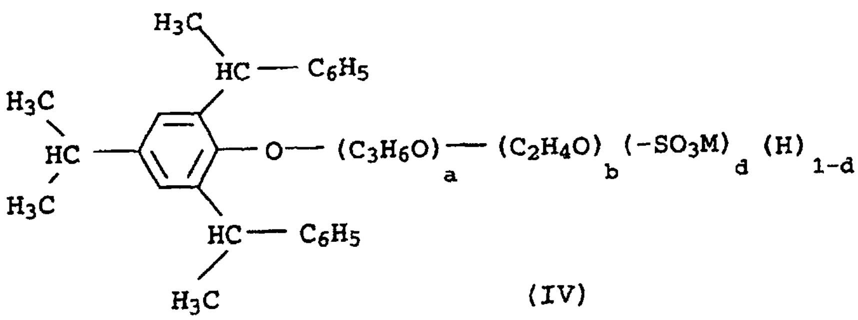

(IV)

worin

- M Alkalimetall, beispielweise Na oder K,
- a 0 bis im Mittel 125
- b im Mittel 37 bis 250, wobei im Falle b>37 das Verhältnis b:a mindestens 1:1 ist
- d 0 oder 1 bedeuten

oder deren Gemische,
10 bis 90 Gew.-% eines ein- oder mehrwertigen Alkohols oder deren Gemische und gegebenenfalls Wasser, sowie ihre Verwendung als Tinten im Ink-Jet-Verfahren sowie für den Sublimations-Transferdruck.

Aus der EP-A-655 527 sind bereits Farbstoffzubereitungen, enthaltend Dispersionsfarbstoffe und spezielle Dispergiermittel, bekannt.

Das nachveröffentlichte Dokument WO 97/46623 offenbart Farbstoffzubereitungen, die neben Chinophthalonfarbstoffen, die frei sind von ionischen Gruppen, und Dispergiermitteln auf Basis von Arylsulfonsäure-Formaldehyd-Kondensationsprodukten ausschließlich Wasser und Polyethylenglykol enthalten.

Aus GB 1 527 396 sind Farbstoffzubereitungen bekannt, die neben einem Farbstoff und einem Wasser/Alkoholgemisch ein dispergiermittel auf Basis eines Arylsulfonsäure-Formaldehyd-Kondensationsprodukts enthalten können. Die anwendungstechnischen Eigenschaften lassen sich jedoch noch verbessern.

Aus EP 0 013 576 ist die Verwendung von Novolakharzen, das sind spezielle alkylierte Phenole oder Polyphenole, als Präparationsmittel für Dispersionsfarbstoffe bekannt. Die Anwendungstechnischen Eigenschaften der so erhältlichen Farbstoffpräparationen sind für den Einsatz im Ink-Jet-Verfahren jedoch nicht optimal.

Aufgabe der vorliegenden Erfindung war es, neue Farbstoffzubereitungen, enthaltend Anthrachinon- oder Chinophthalonfarbstoffe, die frei sind von ionischen Gruppen, bereitzustellen. Die neuen Farbstoffzubereitungen sollten sich insbesondere vorteilhaft für die Anwendung im Ink-Jet-Verfahren, besonders im Piezo- oder Bubble-Jet-Verfahren, zur Herstellung von Drucken auf textilen Substraten sowie beim Sublimations-Transferdruck eignen.

Demgemäß wurden die eingangs näher bezeichneten Farbstoffzubereitungen gefunden.

Geeignete Anthrachinonfarbstoffe, die frei von ionischen Gruppen sind, gehorchen z.B. der Formel I

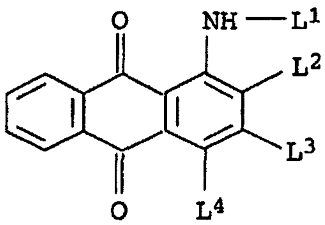 (I),

in der

- $L^1$ Wasserstoff, $C_1$-$C_{10}$-Alkyl oder gegebenenfalls durch $C_1$-$C_4$-Alkyl, $C_1$-$C_4$-Alkoxy, Halogen oder Nitro substituiertes Phenyl,
- $L^2$ und $L^3$ unabhängig voneinander jeweils Wasserstoff, gegebenenfalls durch Phenyl oder $C_1$-$C_4$-Alkylphenyl substituiertes $C_1$-$C_{10}$-Alkoxy, gegebenenfalls durch Phenyl substituiertes $C_1$-$C_{10}$-Alkylthio, Halogen, Hydroxyphenyl, $C_1$-$C_4$-Alkoxyphenyl, $C_1$-$C_6$-Alkanoyl, $C_1$-$C_6$-Alkoxycarbonyl oder einen Rest der Formel

  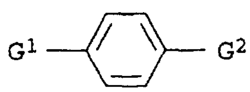 ,

  worin $G^1$ für Sauerstoff oder Schwefel und $G^2$ für Wasserstoff oder $C_1$-$C_8$-Monoalkylsulfamoyl, dessen Alkylkette durch 1 oder 2 Sauerstoffatome in Etherfunktion unterbrochen sein kann, stehen, und
- $L^4$ gegebenenfalls durch Phenyl oder $C_1$-$C_4$-Alkylphenyl substituiertes Amino, Hydroxy oder gegebenenfalls durch Phenyl substituiertes $C_1$-$C_{10}$-Alkylthio bedeuten.

Geeignete Chinophthalonfarbstoffe, die frei von ionischen Gruppen sind, gehorchen z.B. der Formel II

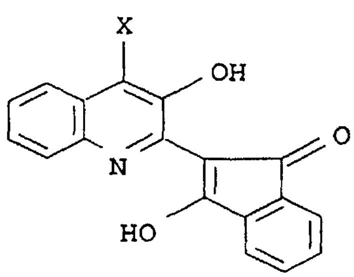 (II),

in der X Wasserstoff, Chlor oder Brom bedeutet.

Alle in der obengenannten Formel I auftretenden Alkylgruppen können sowohl geradkettig als auch verzweigt sein.

Wenn in der obengenannten Formel I substituierte Alkylgruppen auftreten, so weisen sie in der Regel 1 oder 2 Substituenten auf.

Wenn in den obengenannten Formeln substituierte Phenylgruppen auftreten, so weisen sie in der Regel 1 bis 3, vorzugsweise 1 oder 2, Substituenten auf.

Es folgt eine beispielhafte Aufzählung von Resten, wie sie in Formel I definiert sind.

Alkylreste sind z.B. Methyl, Ethyl, Propyl, Isopropyl, Butyl, Isobutyl, sec-Butyl, tert-Butyl, Pentyl, Isopentyl, Neopentyl, tert-Pentyl, Hexyl, 2-Methylpentyl, Heptyl, Octyl, 2-Ethylhexyl, Isooctyl, Nonyl, Isononyl, Decyl oder Isodecyl (die Bezeichnungen Isooctyl, Isononyl und Isodecyl sind Trivialbezeichnungen und stammen von den nach der Oxosynthese erhaltenen Alkoholen - vgl. dazu Ullmann's Encyclopedia of Industrial Chemistry, 5$^{th}$ Edition, Vol. A 1, Seiten 290 bis 293, sowie Vol. A 10, Seiten 284 und 285).

Phenylreste sind z.B. Phenyl, 2-, 3- oder 4-Methylphenyl, 2-, 3- oder 4-Ethylphenyl, 2-, 3- oder 4-Propylphenyl, 2-, 3- oder 4-Isopropylphenyl, 2-, 3- oder 4-Butylphenyl, 2,3-, 2,4- oder 2,6-Dimethylphenyl, 2-, 3- oder 4-Methoxyphenyl, 2-, 3- oder 4-Ethoxyphenyl, 2,3-, 2,4- oder 2,6-Dimethoxyphenyl, 2-, 3- oder 4-Fluorphenyl, 2-, 3- oder 4-Chlorphenyl, 2-, 3- oder 4-Bromphenyl oder 2-, 3- oder 4-Nitrophenyl.

Alkylthio- und Phenylthioreste sind z.B. Methylthio, Ethylthio, Propylthio, Isopropylthio, Butylthio, Isobutylthio, Pentylthio, Hexylthio, Heptylthio, Octylthio, Isooctylthio, 2-Ethylhexylthio, Nonylthio, Isononylthio, Decylthio, Isodecylthio, Benzylthio oder 1- oder 2-Phenylethylthio.

Alkoxyreste sind z.B. Methoxy, Ethoxy, Propoxy, Isopropoxy, Butoxy, Isobutoxy, sec-Butoxy, Pentyloxy, Isopentyloxy, Neopentyloxy, tert-Pentyloxy, Hexyloxy, 2-Methylpentyloxy, Heptyloxy, Octyloxy, Isooctyloxy, 2-Ethylhexyloxy, Nonyloxy, Isononyloxy, Decyloxy, Isodecyloxy, Benzyloxy oder 1- oder 2-Phenylethoxy.

Halogen ist z.B. Fluor, Chlor oder Brom.

Alkoxycarbonylreste sind z.B. Methoxycarbonyl, Ethoxycarbonyl, Propoxycarbonyl, Isopropoxycarbonyl, Butoxycarbonyl, Isobutoxycarbonyl, sec-Butoxycarbonyl, Pentyloxycarbonyl, Isopentyloxycarbonyl, Neopentyloxycarbonyl oder Hexyloxycarbonyl

Alkanoylreste sind z.B. Formyl, Acetyl, Propionyl, Butyryl, Pentanoyl oder Hexanoyl.

Sulfamoylreste sind z.B. Methylsulfamoyl, Ethylsulfamoyl, Propylsulfamoyl, Isopropylsulfamoyl, Butylsulfamoyl, Pentylsulfamoyl, Hexylsulfamoyl, Heptylsulfamoyl, Octylsulfamoyl, 2-Ethylsulfamoyl, 2-Methoxyethylsulfamoyl, 2-Ethoxyethylsulfamoyl, 3,6-Dioxaheptylsulfamoyl, 3,6-Dioxaoctylsulfamoyl, 4,8-Dioxanonylsulfamoyl, 3,7-Dioxaoctylsulfamoyl, 3,7-Dioxanonylsulfamoyl, 4,7-Dioxaoctylsulfamoyl, 4,7-Dioxanonylsulfamoyl oder 4,8-Dioxadecylsulfamoyl.

Bevorzugt sind Farbstoffzubereitungen, enthaltend einen oder mehrere Anthrachinonfarbstoffe der Formel I, in der $L^1$ Wasserstoff, $C_1$-$C_4$-Alkyl oder gegebenenfalls durch Methyl substituiertes Phenyl und $L^4$ Hydroxy, Amino oder gegebenenfalls durch Methyl substituiertes Phenylamino bedeuten.

Weiterhin bevorzugt sind Farbstoffzubereitungen, enthaltend einen oder mehrere Anthrachinonfarbstoffe der Formel I, in der $L^2$ $C_1$-$C_4$-Alkoxy, Acetyl, $C_1$-$C_4$-Alkoxycarbonyl oder einen Rest der Formel

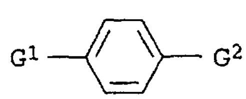

bedeutet, worin $G^1$ und $G^2$ jeweils die obengenannte Bedeutung besitzen, dabei steht $G^1$ insbesondere für Sauerstoff und $G^2$ insbesondere für Wasserstoff.

Weiterhin bevorzugt sind Farbstoffzubereitungen, enthaltend den Chinophthalonfarbstoff der Formel IIa

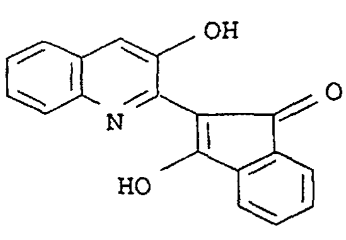

(IIa).

Bei den Farbstoffen der Formel I und II handelt es sich im allgemeinen um bekannte Farbstoffe. Die Anthrachinonfarbstoffe der Formel I sind beispielsweise in K. Venkataraman "The Chemistry of Synthetic Dyes", Vol. III, Seiten 391 bis 413, Academic Press, New York, London, 1970, beschrieben. Die Chinophthalonfarbstoffe der Formel II sind z.B. in der EP-A-83 553 oder der dort zitierten Literatur beschrieben.

Bevorzugt sind Farbstoffzubereitungen, in denen 99 % der in der Zubereitung enthaltenen Farbstoffteilchen kleiner sind als 1 µm.

weiterhin bevorzugt sind Farbstoffzubereitungen, die solche Farbstoffe aus der Anthrachinon- oder Chinophthalonreihe enthalten, deren Sublimationstemperatur 140 bis 300°C beträgt.

Vorzugsweise verwendet man als Dispergiermittel ein Arylsulfonsäure-Formaldehyd-Kondensationsprodukt, das einen Gehalt von 3 bis 50 Gew.-%, bezogen auf das Gewicht des Dispergiermittels, einer oder mehrerer aromatischen oder langkettigen aliphatischen Carbonsäuren, deren Salzen, deren Anhydriden oder einer Mischung hieraus aufweist.

Als Arylsulfonsäure-Formaldehyd-Kondensate werden vor allem solche mit einem maximalen Gehalt an Sulfonsäuregruppen von 40 Gew.-% verwendet.

Als Ausgangsprodukt für die Arylsulfonsäuren kommt insbesondere ein Gemisch solcher aromatischer Verbindungen in Betracht, die durch thermische Spaltung eines naphthenischen Rückstandsöls und Fraktionieren der Spaltprodukte erhältlich sind. Die naphthenischen Rückstandsöle fallen beispielsweise beim Cracken von Leichtbenzin an. Sie werden z.B. in der DE-A-2 947 005 als hochsiedende aromatische Kohlenwasserstofföle bezeichnet. Das naphthenische Rückstandsöl wird vorzugsweise bei einer Temperatur von 1400 bis 1700°C thermisch gespalten. Die Spaltprodukte werden dann einer fraktionierenden Destillation zugeführt. Die bei Normaldruck (1013 mbar) von 100 bis 120°C übergehende Fraktion wird gesammelt und als aromatische Verbindung der Sulfonierung zugeführt. Eine solche Fraktion wird bei dem bekannten Acetylen-Öl-Quench-Prozeß üblicherweise als Nebenprodukt erhalten (Ullmann's Encyclopedia of Industrial chemistry, VCH Verlagsgesellschaft mbH, Weinheim, 1985, Volume A1, Seiten 107 bis 112).

Diese Aromatenfraktion besteht aus einer Mischung vieler aromatischer Substanzen, deren Struktur und Menge praktisch nicht im einzelnen ermittelt werden kann. Folgende Arylverbindungen sind die hauptsächlichsten Vertreter dieser Aromatenfraktion:

| | Gew.-% in der Aromatenfraktion |
|---|---|
| Naphthalin | 30-55 |
| 2-Methylnaphthalin | 5-15 |
| 1-Methylnaphthalin | 4-10 |
| Inden | 3-10 |
| Diphenyl | 1- 5 |
| Methylinden | 1- 5 |
| Acenaphthen | 1- 4 |

Die Aromatenfraktion enthält außerdem an identifizierten Bestandteilen in Mengen von 0,1 bis etwa 2 Gew. % folgende Arylverbindungen: Fluoren, Indan, Methylstyrol, Phenanthren, Methylindan, Dimethylnaphthalin, Ethylnaphthalin, Xylole, Tetralin, Styrol, Methylethylbenzol, Anthracen, Fluoranthren, Pyren, Acenaphthylen und Toluol.

Besonders geeignete Arylsulfonsäuren enthalten in der Regel $\alpha$- und $\beta$-Naphthalinsulfonsäuren, wobei das Verhältnis der $\alpha$- zu den $\beta$-Isomeren 20:1 bis 1:8, insbesondere 10:1 bis 1:5 beträgt.

Geeignete aromatische Carbonsäuren oder deren Derivate sind beispielsweise Naphthalincarbonsäure, Naphthalsäure, Terephthalsäure, Isophthalsäure, Benzoesäure, Trimellitsäure, Phenylessigsäure, Phenoxyessigsäure, Salicylsäure, p-Hydroxybenzoesäure, Diphenylessigsäure, m-Hydroxybenzoesäure, Benzoltetracarbonsäure oder Säureanhydride, wie Phthalsäureanhydrid, Trimellitsäureanhydrid, Benzol-1,2,4,5-tetracarbonsäuredianhydrid oder Naphthalsäureanhydrid.

Geeignete langkettige aliphatische Carbonsäuren sind insbesondere gesättigte oder olefinisch ungesättigte, lineare oder verzweigte aliphatische Monocarbonsäuren mit 8 bis 22, vorzugsweise 8 bis 18 Kohlenstoffatomen natürlichen oder synthetischen Ursprungs, beispielsweise höhere Fettsäuren wie Caprylsäure, Caprinsäure, Laurinsäure, Myristinsäure, Palmitinsäure, Stearinsäure, Ölsäure, Linolsäure oder Linolensäure, oder synthetisch hergestellte Carbonsäuren wie 2-Ethylhexansäure, Isononansäure oder Isotridecansäure.

Weiterhin sind auch Mischungen von Anhydriden, Mischungen von Carbonsäuren, Mischungen von Salzen der in Betracht kommenden Carbonsäuren sowie Mischungen von Carbonsäuren und Anhydriden von Interesse. Als Salze der genannten Carbonsäuren kommen die Alkali-, Ammonium- oder Erdalkalisalze in Betracht, die beispielsweise durch Neutralisation dieser Carbonsäuren mit Natronlauge, Kalilauge, Lithiumhydroxid, Soda, Magnesiumcarbonat, Calciumoxid, Calciumhydroxid, Ammoniak oder Alkanolaminen, wie Ethanolamin, Diethanolamin oder Triethanolamin, erhältlich sind.

Besonders bevorzugt werden Natriumbenzoat, Natriumphenylacetat, Natriumsalicylat, Natrium-4-hydroxybenzoat, Natriumterephthalat, Natrium-2-hydroxy-3-naphthalincarboxylat, Naphthalin-1-carbonsäure, Phthalsäureanhydrid oder Benzoesäure in den Dispergiermitteln verwendet.

In den erfindungsgemäßen Farbstoffzubereitungen kommen vorzugsweise solche Dispergiermittel zur Anwendung, die

A) 50 bis 97 Gew.-%, insbesondere 70 bis 95 Gew.-%, einer oder mehrerer Arylsulfonsäure-Formaldehyd-Kondensate und

B) 3 bis 50 Gew.-%, insbesondere 5 bis 30 Gew.-%, einer oder mehrerer aromatischen oder langkettigen aliphatischen Carbonsäuren, deren Salzen oder deren Anhydriden oder einer Mischung hieraus enthalten.

Bei den erfindungsgemäß als Dispergiermittel zur Anwendung gelangenden Arylsulfonsäure-Formaldehyd-Kondensationsprodukten handelt es sich um an sich bekannte Produkte. Sie sind z.B. in der US-A-5 186 846 beschrieben.

Vorzugsweise verwendet man als wasserlösliche Dispergiermittel auf Basis von oxalkylierten Phenolen solche der Formel III oder IV

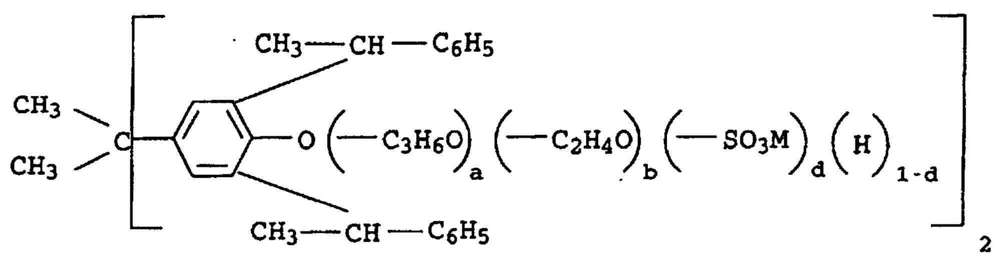

(III)

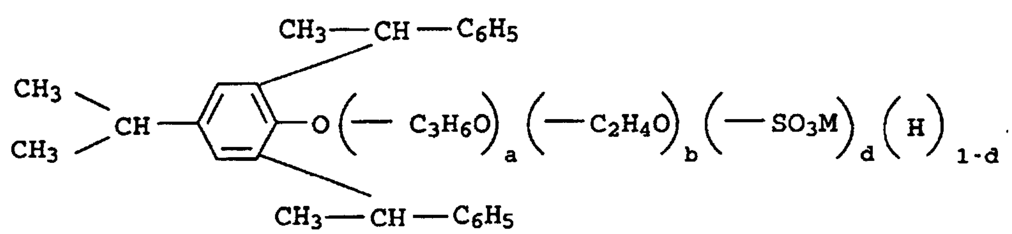

(IV),

worin

M Alkalimetall, beispielsweise Na oder K,

a 0 bis im Mittel 125,

b im Mittel 37 bis 250, wobei im Falle b>37, das Verhältnis b:a mindestens 1:1 ist, und

d 0 oder 1 bedeuten, oder deren Gemische.

Die Produkte der Formel III und IV werden durch Umsetzen der Phenolderivate der Formel V oder VI

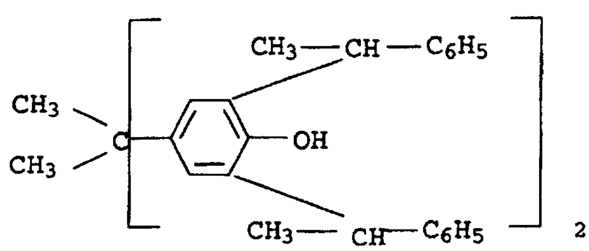

(V)

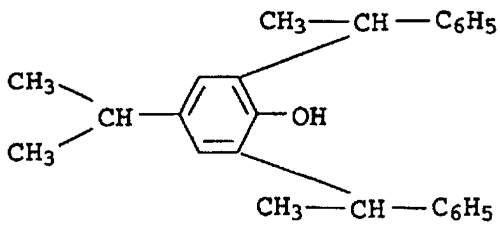

(VI)

mit Propylenoxid und folgender Umsetzung des Adduktes mit Ethylenoxid oder durch Umsetzen von V und/oder VI mit Ethylenoxid erhalten. Gegebenenfalls werden die Addukte mit Chlorsulfonsäure oder Schwefeltrioxid vollständig oder partiell zu Schwefelsäurehalbester umgesetzt und die erhaltenen Halbester mit alkalisch wirkenden Mitteln neutral gestellt.

Die Phenole der Formel V und VI werden durch Umsetzen von Phenol oder 2,2-(p,p'-Bishydroxydiphenyl) propan mit 3 oder 4 mol Styrol in Gegenwart von Säure als Katalysator erhalten. Die Phenole V und VI werden nach bekannten Verfahren zuerst mit Ethylenoxid oder nur mit Ethylenoxid in Gegenwart von sauer oder alkalisch wirkenden Katalysatoren zu den entsprechenden Oxalkylierungsprodukten III und IV mit d=O umgesetzt. Die Oxalkylierung kann z.B. nach dem in der US-A-2 979 528 beschriebenen Verfahren erfolgen. Für den Fall, daß b > 37 ist, muß der Quotient

$$\frac{b}{a} > 1 \text{ sein.}$$

Die Schwefelsäurehalbester werden durch Reaktion der Oxalkylierungsprodukte mit Chlorsulfonsäure oder Schwefeltrioxid hergestellt, wobei die Menge so gewählt werden kann, daß alle freien Hydroxygruppen oder nur ein Teil sulfatiert wird. Im letzteren Falle entstehen Gemische aus Verbindungen der Formel III und IV, die freie und sulfatierte Hydroxygruppen enthalten. Zur Verwendung als Dispergiermittel werden die bei der Umsetzung erhaltenen Halbester der Schwefelsäure in wasserlösliche Salze überführt. Als solche kommen vorteilhaft die Alkalimetallsalze. z.B. die Natrium- oder Kaliumsalze, in Betracht. Dabei sind im Falle von Chlorsulfonsäure zwei Äquivalente, bei Schwefeltrioxid ein Äquivalent basisch wirkender Verbindungen erforderlich. Als letztere verwendet man zweckmäßigerweise wäßriges Alkalimetallhydroxid. Bei der Neutralisation sollte die Temperatur 70°C nicht überschreiten. Die erhaltenen Salze können in Form von wäßrigen Lösungen oder auch als solche isoliert und in fester Form verwendet werden.

Bevorzugt sind Farbstoffzubereitungen mit Dispergiermitteln, worin a 0 bis im Mittel 2,5,b im Mittel 37 bis 250 und d 0 bis im Mittel 0,5 ist. Ganz besonders bevorzugt sind Zubereitungen mit Mitteln, in denen a 0 bis im Mittel 2,5, b im Mittel 50 bis 100 und d im Mittel 0,5 ist.

Bei den obengenannten Dispergiermitteln handelt es sich um an sich bekannte Verbindungen. Sie sind z.B. aus der US-A-4 218 218 bekannt.

Bevorzugt sind Farbstoffzubereitungen, die jeweils bezogen auf das Gewicht der Zubereitung 1 bis 15 Gew.-% eines oder mehrerer Farbstoffe aus der Klasse der Anthrachinone oder Chinophthalone und 0,5 bis 10 Gew.-% Dispergiermittel enthalten.

Weiterhin bevorzugt sind Farbstoffzubereitungen, die zusätzlich, bezogen auf das Gewicht der Zubereitung, 10 bis 80 Gew.-%, vorzugsweise 10 bis 70 Gew.-%, eines ein- oder mehrwertigen Alkohols oder deren Mischungen enthalten.

Geeignete ein- oder mehrwertige Alkohole sind in der Regel Alkanmono- oder -polyole, insbesondere Polyole, die 2 bis 8 Kohlenstoffatome, vorzugsweise 2 bis 6 Kohlenstoffatome und bis zu 4, vorzugsweise 2 bis 4, alkoholische Hydroxygruppen aufweisen. Beispielhaft sind zu nennen Ethan-1,2-diol, Propan-1,2-diol, Propan-1,3-diol, Glycerin, Pentan-1,2,5-triol oder Hexan-1,2,6-triol.

Darüber hinaus können die Farbstoffzubereitungen, bezogen auf das Gewicht der Zubereitung, bis zu 10 Gew.-% vorzugsweise 0,1 bis 10 Gew.-%, eines Polyalkylenglykols enthalten.

Geeignete Polyalkylenglykole, die in den erfindungsgemäßen Farbstoffzubereitungen enthalten sein können, sind insbesondere Polyethylen- oder Polypropylenglykole, die beispielsweise ein mittleres Molekulargewicht von 100 bis 1000, vorzugsweise 100 bis 600 und insbesondere ca. 400 aufweisen. Gegebenenfalls können auch Ethylenoxid/Propylenoxid-Copolymere zur Anwendung gelangen.

Weitere Bestandteile der erfindungsgemäßen Farbstoffzubereitungen können z.B. Hilfsmittel, wie Konservierungsmittel, Antioxidantien, Schaumverhinderungsmittel oder Mittel zur Regulierung der Viskosität sein. Diese Mittel sind an sich bekannt und handelsüblich. Wenn diese Mittel in den erfindungsgemäßen Farbstoffzubereitungen zugegen sind, beträgt ihre Gesamtmenge in der Regel 1 Gew.-% oder weniger, bezogen auf das Gewicht der Zubereitung.

Weiterhin können in bevorzugten Farbstoffzubereitungen auch Tenside zur Reduzierung der Oberflächenspannung und zur Verbesserung des Benetzungsverhaltens im Tintenkopf zur Anwendung gelangen.

Bevorzugte Farbstoffzubereitungen enthalten Tenside auf der Basis von ethoxylierten oder propoxylierten Fett- oder Oxoalkoholen, Propylenoxid-Ethylenoxid-Blockcopolymeren, Ethoxylaten von Ölsäure oder Alkylphenolen, Alkylphenolethersulfaten, Alkylpolyglycosiden, Alkylphosphonaten, Alkylphenylphosphonaten, Alkylphenylphosphaten oder Alkindiolen.

Selbstverständlich beträgt die Summe der Bestandteile in den erfindungsgemäßen Farbstoffpräparationen jeweils 100 Gew.-%.

Sofern die Summe der Bestandteile der erfindungsgemäßen Farbstoffzubereitungen einen Wert ergibt, der kleiner als 100 Gew.-% ist, ist der restliche Bestandteil in der Regel Wasser.

Die erfindungsgemäßen Farbstoffzubereitungen weisen üblicherweise eine Viskosität von 1 bis 4 $mm^2$/sec, vorzugsweise 2 bis 3,5 $mm^2$/sec auf.

Die Oberflächenspannung der erfindungsgemäßen Farbstoffzubereitungen beträgt in der Regel 30 bis 70 Nm/m, vorzugsweise 40 bis 60 Nm/m.

Der pH-Wert der erfindungsgemäßen Farbstoffzubereitungen liegt im allgemeinen bei 5 bis 11, vorzugsweise 7 bis 10.

Die Herstellung der neuen Farbstoffzubereitungen erfolgt auf an sich bekanntem Weg. So kann man den Farbstoff, beispielsweise in Form eines Preßkuchens, zusammen mit dem Dispergiermittel, dem ein- oder mehrwertigen Alkohol und gegebenenfalls Polyalkylenglykol in Gegenwart von Wasser mischen und in einer geeigneten Apparatur vordispergieren. Die resultierende Mischung kann dann in einer Mühle behandelt werden, um die gewünschte Größe der Farbstoffteilchen einzustellen. Schließlich kann man die Endeinstellung vornehmen, indem man noch entsprechende Mengen Wasser, gegebenenfalls Polyalkylenglykol und gegebenenfalls weitere Hilfsmittel zusetzt und nach dem Mischen mittels eines Siebs, vorzugsweise mit einer Porengröße von 1 µm, filtriert.

Die erfindungsgemäßen Farbstoffzubereitungen eignen sich in vorteilhafter Weise als Tinten im Ink-Jet-Verfahren sowie für den Sublimations-Transferdruck.

Beim Ink-Jet-Verfahren (Tintenstrahldruck-Verfahren) verwendet man üblicherweise wäßrige Tinten, die in kleinen Tröpfchen direkt auf das Substrat gesprüht werden. Man unterscheidet dabei ein kontinuierliches Verfahren, bei dem die Tinte gleichmäßig durch eine Düse gepreßt und durch ein elektrisches Feld, abhängig vom zu druckenden Muster, auf das Substrat gelenkt wird, und ein unterbrochenes Tintenstrahl oder "Drop-on-Demand"-Verfahren, bei dem der Tintenausstoß nur dort erfolgt, wo ein farbiger Punkt gesetzt werden soll. Bei dem letztgenannten Verfahren wird entweder über einen piezoelektrischen Kristall oder eine beheizte Kanüle (Bubble- oder Thermo-Jet-Verfahren) Druck auf das Tintensystem ausgeübt und so ein Tintentropfen herausgeschleudert. Solche Verfahrensweisen sind in Text. Chem. Color, Band 19 (8), Seiten 23 bis 29, 1987, und Band 21 (6), Seiten 27 bis 32, 1989, beschrieben.

Besonders geeignet sind die erfindungsgemäßen Farbstoffzubereitungen als Tinten für das Bubble-Jet-Verfahren oder für das Verfahren mittels eines piezoelektrischen Kristalls.

Geeignete Substrate für das Ink-Jet-Verfahren sind neben Papier auch die im folgenden aufgeführten Trägermaterialien.

Beim Sublimations-Transferdruck wird ein Muster zunächst auf einem Zwischenträger vorgebildet und anschließend durch Hitzeeinwirkung auf einen Träger übertragen. Der Farbstoff kann sowohl beim Transfer selbst als auch in einem anschließenden Fixier- und Nachbehandlungsprozeß fixiert werden. Dieses Verfahren ist allgemein bekannt und z.B, in Ullmann's Encyclopedia of Industrial Chemistry, 5th Edition, Band A26, Seiten 499 bis 501, beschrieben.

Geeignete Träger sind insbesondere textile Materialien, z.B. Fasern, Garne, Zwirne, Maschenware, Webware oder Non-wovens aus Polyester, modifiziertem Polyester, z.B. anionisch modifiziertem Polyester, Mischgewebe von Polyester mit Cellulose, Baumwolle, Viskose oder Wolle, Polyamid, Polyacrylnitril, Triacetat, Acetat, Polycarbonat, Polypropylen oder Polyvinylchlorid, Polyestermikrofasern oder auch mit Kunststoffen beschichtete Träger, wie Metallfolien, Glas oder Keramik.

Die erfindungsgemäßen Farbstoffzubereitungen eignen sich besonders gut für den Sublimations-Transferdruck, bei dem das Muster auf dem Zwischenträger mittels des Ink-Jet-Verfahrens erzeugt wird.

Die neuen Farbstoffzubereitungen zeichnen sich dadurch aus, daß sie beim Ink-Jet-Verfahren zu keiner Verstopfung der Düsen führen. Weiterhin erhält man bei ihrer Anwendung streifenfreie Drucke.

Die folgenden Beispiele sollen die Erfindung näher erläutern.

Folgende Farbstoffe kamen zur Anwendung:

Farbstoff 1

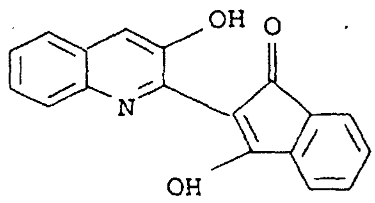

Farbstoff 2

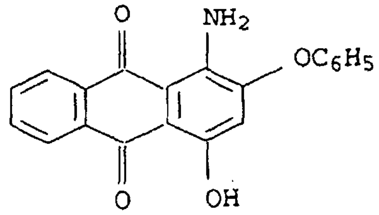

Farbstoff 3

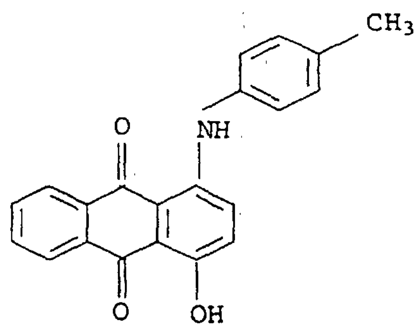

Farbstoff 4

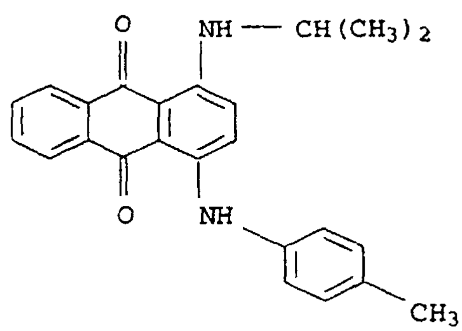

Herstellung der Farbstoffzubereitung

15 g Farbstoff, 15 g Polyethylenglykol (mittl. Molekulargewicht: 400), 7,5 g eines Dispergiermittels auf Basis eines Arylsulfonsäure-Formaldehyd-Kondensationsproduktes, das zusätzlich noch Benzoesäure enthält und in der US-A-5 186 846 als Dispergiermittel 3 beschrieben ist, 0,37 g 50 gew.-%ige wäßrige Lösung von Glutardialdehyd und 0,75 g 47 gew.-%ige wäßrige Lösung von Tetramethylolacetylendiharnstoff werden mit Wasser zum Gesamtgewicht von 100 g aufgefüllt und in einer Mühle angeteigt. Danach wird der pH-Wert mit 10 gew.-%iger Natronlauge auf 8,5

gestellt.

Anschließend wird die Mischung in einer Rührwerkskugelmühle gemahlen, so daß 99 % der Farbstoffteilchen eine Größe von kleiner 1 µm besitzen.

Zur Endeinstellung der Zubereitungen 1 bis 4 werden 26,7 g Mahlgut mit 72,5 g Ethan-1,2-diol (im folgenden: Glykol), 0,1 g 50 gew.-%ige wäßrige Lösung von Glutardialdehyd und 0,4 g 47 gew.-%ige wäßrige Lösung von Tetramethylolacetylendiharnstoff versetzt, gemischt und über ein Sieb mit einer Porengröße von 1 µm filtriert.

Man erhielt die in der folgenden Tabelle 1 aufgeführten Farbstoffzubereitungen. (Die Prozentangaben sind jeweils Gewichtsprozente.)

Tabelle 1

| | Zubereitung Nr. | | | |
|---|---|---|---|---|
| | 1 | 2 | 3 | 4 |
| Farbstoff Nr. 1 (%) | 4 | | | |
| Farbstoff Nr. 2 (%) | | 4 | | |
| Farbstoff Nr. 3 (%) | | | 4 | |
| Farbstoff Nr. 4 (%) | | | | 4 |
| Dispergiermittel (%) | 2 | 2 | 2 | 2 |
| Glykol (%) | 72,5 | 72,5 | 72,5 | 72,5 |
| 50 gew.-%ige wäßrige Lösung von Glutardialdehyd (%) | 0,5 | 0,5 | 0,5 | 0,5 |
| 47 gew.-%ige wäßrige Lösung von Tetramethylolacetylenharnstoff (%) | 1,0 | 1,0 | 1,0 | 1,0 |
| vollentsalztes Wasser (%) | 20 | 20 | 20 | 20 |

Die Farbstoffzubereitungen weisen folgende physikalischen und drucktechnischen Eigenschaften auf.

Tabelle 2

| | Zubereitung Nr. | | | |
|---|---|---|---|---|
| | 1 | 2 | 3 | 4 |
| pH-Wert | 7,67 | 7,32 | 7,57 | 7,45 |
| Oberflächenspannung [mN/m] | 49,7 | 50,4 | 51,2 | 51,7 |
| Viskosität [$mm^2$/sec] | 11,75 | 10,9 | 19,1 | 10,54 |
| Teilchengröße [µm] X 50 | 0,32 | 0,33 | 0,46 | 0,42 |
| Tropfengewicht [ng] | 125 | 120 | 128 | 130 |

Zur Endeinstellung der Zubereitungen 5 bis 8 werden 13,35 g Mahlgut mit 36,25 g Glykol, 0,5 g 50 gew.-%ige wäßrige Lösung von Glutardialdehyd, 0,2 g 47 gew.-%ige wäßrige Lösung von Tetramethylolacetylendiharnstoff und 50 g vollentsalztem Wasser versetzt, gemischt und über ein Sieb mit einer Porengröße von 1 µm filtriert.

Man erhielt die in der folgenden Tabelle 3 aufgeführten Farbstoffzubereitungen (Die Prozentangaben sind jeweils Gewichtsprozente) :

Tabelle 3

| | Zubereitung Nr. | | | |
|---|---|---|---|---|
| | 5 | 6 | 7 | 8 |
| Farbstoff Nr. 1 (%) | 2 | | | |
| Farbstoff Nr. 2 (%) | | 2 | | |
| Farbstoff Nr. 3 (%) | | | 2 | |

Tabelle 3 (fortgesetzt)

| | Zubereitung Nr. | | | |
|---|---|---|---|---|
| | 5 | 6 | 7 | 8 |
| Farbstoff Nr. 4 (%) | | | | 2 |
| Dispergiermittel (%) | 2 | 2 | 2 | 2 |
| Glykol (%) | 36,25 | 36,25 | 36,25 | 36,25 |
| 50 %ige wäßrige Lösung von Glutardialdehyd (%) | 0,25 | 0,25 | 0,25 | 0,25 |
| 47 %ige wäßrige Lösung von Tetramethylenacetylenharnstoff (%) | 0,5 | 0,5 | 0,5 | 0,5 |
| vollentsalztes Wasser (%) | 59 | 59 | 59 | 59 |

Die Farbstoffzubereitungen weisen folgende physikalischen und drucktechnischen Eigenschaften auf.

Tabelle 4

| | Zubereitung Nr. | | | |
|---|---|---|---|---|
| | 5 | 6 | 7 | 8 |
| pH-Wert | 7,81 | 7,12 | 7,6 | 7,2 |
| Oberflächenspannung [mN/m] | 51,9 | 57 | 53,7 | 56,4 |
| Viskosität [$mm^2/sec$] | 2,69 | 2,61 | 4,51 | 2,72 |
| Teilchengröße [µm] $X_{50}$ | 0,32 | 0,33 | 0,46 | 0,42 |
| Tropfengewicht [ng] | 126 | 123 | 125 | 125 |

Zur Endeinstellung der Zubereitungen 9 bis 12 werden 13,35 g Mahlgut mit 36,25 g Glykol, 0,5 g 50 gew.-%ige wäßrige Lösung von Glutardialdehyd, 0,2 g 47 gew.-%ige wäßrige Lösung von Tetramethylolacetylendiharnstoff, 1 g eines handelsüblichen Tensids auf Basis eines Alkylphosphonats und 50 g vollentsalztem Wasser versetzt, gemischt und über ein Sieb mit einer Porengröße von 1 µm filtriert.

Man erhielt die in den folgenden Tabelle 5 aufgeführten Farbstoffzubereitungen (Die Prozentangaben sind jeweils in Gewichtsprozente):

Tabelle 5

| | Zubereitung Nr. | | | |
|---|---|---|---|---|
| | 9 | 10 | 11 | 12 |
| Farbstoff Nr. 1 (%) | 2 | | | |
| Farbstoff Nr. 2 (%) | | 2 | | |
| Farbstoff Nr. 3 (%) | | | 2 | |
| Farbstoff Nr. 4 (%) | | | | 2 |
| Dispergiermittel (%) | 2 | 2 | 2 | 2 |
| Glykol (%) | 36,25 | 36,25 | 36,25 | 36,25 |
| 50 %ige wäßrige Lösung von Glutardialdehyd (%) | 0,25 | 0,25 | 0,25 | 0,25 |
| 47 %ige wäßrige Lösung von Tetramethylenacetylenharnstoff (%) | 0,5 | 0,5 | 0,5 | 0,5 |
| Tensid (%) | 0,1 | 0,1 | 0,1 | 0,1 |
| vollentsalztes Wasser (%) | 60,9 | 60,9 | 60,9 | 60,9 |

Die Farbstoffzubereitungen weisen folgende physikalischen und drucktechnischen Eigenschaften auf:

Tabelle 6

| | Zubereitung Nr. | | | |
|---|---|---|---|---|
| | 9 | 10 | 11 | 12 |
| pH-Wert | 7,54 | 7,3 | 7,4 | 7,23 |
| Oberflächenspannung [mN/m] | 34,3 | 37,5 | 39 | 38,1 |
| Viskosität [$mm^2$/sec] | 2,81 | 2,5 | 6,08 | 2,68 |
| Teilchengröße [µm] $X_{50}$ | 0,32 | 0,33 | 0,46 | 0,42 |
| Tropfengewicht [ng] | 122 | 118 | 130 | 125 |

Testmethoden und Bewertungen

1) Oberflächenspannung

Die Oberflächenspannung wurde mit dem Digital-Tensiometer K 10 der Fa. Krüss bestimmt. Die in den Tabellen angegebenen Werte sind die Mittelwerte aus 3 Messungen.

2) Viskosität

Die Viskosität wurde nach der Ubbelohde Methode (DIN 51662) bestimmt.

3) pH-Wert

Der pH-Wert wurde mit pH-Meter 763 der Fa. Knick bestimmt.

4) Teilchengrößenbestimmung

Die Teilchengrößenverteilung wurde mit einem CILAS Granulometer HR 850 der Fa. Alcatel gemessen.

5) Kogationstest

Von besonderer Wichtigkeit ist das Verhalten der Tinten während des Druckvorgangs in den Düsen. Die Neigung der Tinten Ablagerungen und Verstopfungen in den Düsen zu bilden, wurde mit nachstehendem Test überprüft.

Als Testgerät wurden ein Epson Stylus Color II (Piezodrucker der Firma Seiko Epson) sowie ein Desk Jet Plus (Bubble Jet-Drucker der Fa. Hewlett-Packard) verwendet.

Zunächst wurde das mittlere Tropfengewicht in Abhängigkeit der, an die Düsen angelegten Spannung ermittelt. Anschließend wurden bei konstanter Spannung 1 Million Impulse an jede Düse gegeben und danach erneut das mittlere Tropfengewicht einer definierten Tropfenanzahl bestimmt. Dieser Vorgang wurde insgesamt 10 mal wiederholt.

Bei idealem Verhalten der Tinten sollte das mittlere Tropfengewicht über den Versuchszeitraum konstant bleiben.

Die Veränderung des Tropfengewichtes der einzelnen Tinten ist in den Tabellen angeführt.

Alle Tinten weisen in den oben angegebenen Druckern ein exzellentes Laufverhalten auf.

Das Anschreibverhalten wurde für die Tinten nach folgendem Verfahren getestet.

Es wurden zwei Blätter (DIN A4 Format) mit einer rechteckigen Fläche im Format 18 cm x 24 cm bedruckt. Dann wurde der Drucker 4 h nicht betrieben. Nach diesem Zeitraum, in welchem die Oberfläche der Tinte in den Düsen gegebenenfalls eintrocknen konnte, wurde ein weiteres Blatt (DIN A4), wie oben beschrieben, bedruckt. Das Anschreibverfahren wurde aus dem Einsetzen der Farbe während des Druckvorganges beurteilt. Alle erfindungsgemäßen Zubereitungen weisen ein exzellentes Anschreibverhalten auf. Es wurde nach einer Standzeit des Druckkopfes von 72 h in der Parkposition bei keiner der Tinten ein Ausfall der Düsen in der ersten Druckzeile beobachtet.

Vergleich:

Die in der älteren Anmeldung PCT/EP 97/02759 als Zubereitung Nr. 1 beschriebene Präparation wurde in einem Desk Jet Plus sowie in einem Epson Stylus Color II, wie oben beschrieben, getestet. Im Desk Jet Plus-Drucker

wurde bei kontinuierlichem Druck ein einwandfreies Druckbild beobachtet, bei längerem Stehen (kleiner 4 h), verstopften die Düsen nach kurzer Zeit, so daß nur nach intensiver, mechanischer Reinigung des Druckkopfes der Druckvorgang fortgesetzt werden konnte.

Im Epson Stylus Color II fielen während des Druckes bis zu 10 der 20 Düsen des Farbkopfes während des kontinuierlichen Drucks aus. Bei längerem Stehen ohne Druckvorgang (Druckkopf in der Parkposition) trockneten alle Düsen innerhalb kurzer Zeit ein. Ein erneutes Anschreiben war nur nach intensivem Reinigen mit geeigneten Lösungsmitteln möglich. Die mechanische Reinigung war nicht ausreichend.

## Patentansprüche

1. Farbstoffzubereitungen, enthaltend, jeweils bezogen auf das Gewicht der Zubereitung, 0,1 bis 30 Gew.-% eines oder mehrerer Farbstoffe aus der Klasse der Anthrachinone oder Chinophthalone, die frei sind von ionischen Gruppen, 0,1 bis 20 Gew.-% eines Dispergiermittels auf Basis eines Arylsulfonsäure-Formaldehyd-Kondensationsprodukts, das einen Gehalt von 3 bis 50 Gew.-%, bezogen auf das Gewicht des Dispergiermittels, einer oder mehrerer aromatischen oder langkettigen aliphatischen Carbonsäuren, deren Salzen, deren Anhydriden oder einer Mischung hieraus aufweist, oder 0,1 bis 20 Gew.-% eines wasserlöslichen Dispergiermittels auf Basis von oxalkylierten Phenolen der Formel III oder IV,

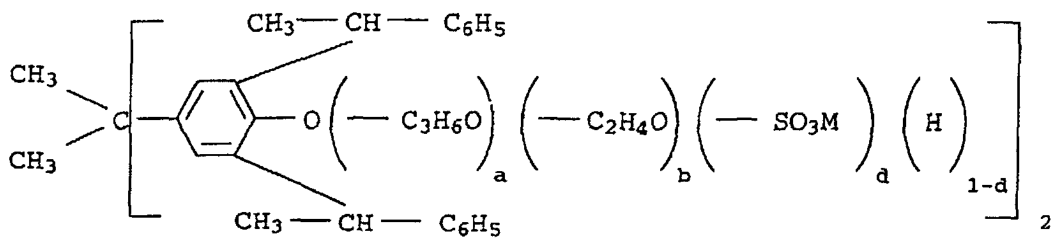

(III)

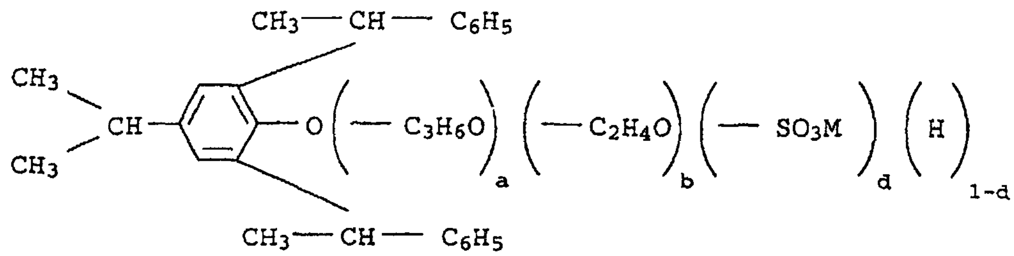

(IV),

a 0 bis im Mittel 125,

b im Mittel 37 bis 250, wobei im Falle b>37 das Verhältnis b:a mindestens 1:1 ist,

d 0 oder 1, und

M Alkalimetall bedeuten,

oder deren Gemische,
10 bis 90 Gew.-% eines ein- oder mehrwertigen Alkohols oder deren Mischungen und gegebenenfalls Wasser, wobei solche Farbstoffzubereitungen ausgenommen sind, die als flüssiges Medium ausschließlich Wasser und Polyalkylenglykol enthalten, sofern sie ein Dispergiermittel auf Basis eines Arylsulfonsäure-Formaldehyd-Kondensationsproduktes aufweisen.

**2.** Farbstoffzubereitungen nach Anspruch 1, **dadurch gekennzeichnet, daß** sie, jeweils bezogen auf das Gewicht der Zubereitung 1 bis 15 Gew.-% eines oder mehrerer Farbstoffe aus der Klasse der Anthrachinone oder Chinophthalone und 0,5 bis 10 Gew.-% Dispergiermittel enthalten.

**3.** Farbstoffzubereitungen nach Anspruch 1, **dadurch gekennzeichnet, daß** sie als ein- oder mehrwertigen Alkohol ein Alkanmono- oder -polyol mit 2 bis 8 Kohlenstoffatomen und bis zu 4 alkoholische Hydroxygruppen enthalten.

**4.** Farbstoffzubereitungen nach Anspruch 1, **dadurch gekennzeichnet**, 99 % der in der Zubereitung enthaltenen Farbstoffteilchen kleiner sind als 1 µm.

**5.** Farbstoffzubereitungen nach Anspruch 1, **dadurch gekennzeichnet, daß** sie Anthrachinonfarbstoffe der Formel I

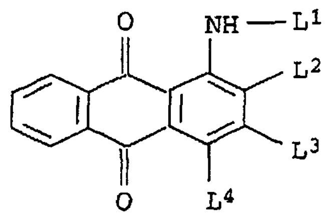

(I)

enthalten, in der

$L^1$ Wasserstoff, $C_1$-$C_{10}$-Alkyl oder gegebenenfalls durch $C_1$-$C_4$-Alkyl, $C_1$-$C_4$-Alkoxy, Halogen oder Nitro substituiertes Phenyl,

$L^2$ und $L^3$ unabhängig voneinander jeweils Wasserstoff, gegebenenfalls durch Phenyl oder $C_1$-$C_4$-Alkylphenyl substituiertes $C_1$-$C_{10}$-Alkoxy, gegebenenfalls durch Phenyl substituiertes $C_1$-$C_{10}$-Alkylthio, Halogen, Hydroxyphenyl, $C_1$-$C_4$-Alkoxyphenyl, $C_1$-$C_6$-Alkanoyl, $C_1$-$C_6$-Alkoxycarbonyl oder einen Rest der Formel

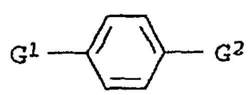

,

worin $G^1$ für Sauerstoff oder Schwefel und $G^2$ für Wasserstoff oder $C_1$-$C_8$-Monoalkylsulfamoyl, dessen Alkylkette durch 1 oder 2 Sauerstoffatome in Etherfunktion unterbrochen sein kann, stehen, und

$L^4$ gegebenenfalls durch Phenyl oder $C_1$-$C_4$-Alkylphenyl substituiertes Amino, Hydroxy oder gegebenenfalls durch Phenyl substituiertes $C_1$-$C_{10}$-Alkylthio bedeuten.

**6.** Farbstoffzubereitungen nach Anspruch 1, **dadurch gekennzeichnet, daß** sie Chinophthalonfarbstoffe der Formel II

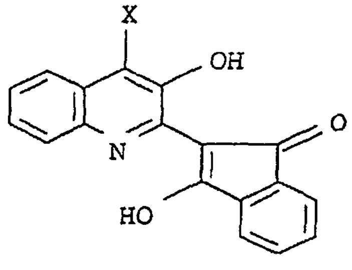

(II)

enthalten,
in der X Wasserstoff, Chlor oder Brom bedeutet.

7. Verwendung der Farbstoffzubereitungen gemäß Anspruch 1 als Tinten im Ink-Jet-Verfahren.

8. Verwendung der Farbstoffzubereitungen gemäß Anspruch 1 als Tinten im Sublimations-Transferdruck.

**Claims**

1. Dye preparations comprising, based on the weight of the preparation, from 0.1 to 30% by weight of one or more dyes selected from the class of the anthraquinones or quinophthalones which are free of ionic groups, from 0.1 to 20% by weight of a dispersant based on an arylsulfonic acid-formaldehyde condensation product comprising from 3 to 50% by weight, based on the weight of the dispersant, of one or more aromatic or long-chain aliphatic carboxylic acids, their salts, their anhydrides or a mixture thereof, or from 0.1 to 20% by weight of a water-soluble dispersant based on alkoxylated phenols of the formula III or IV

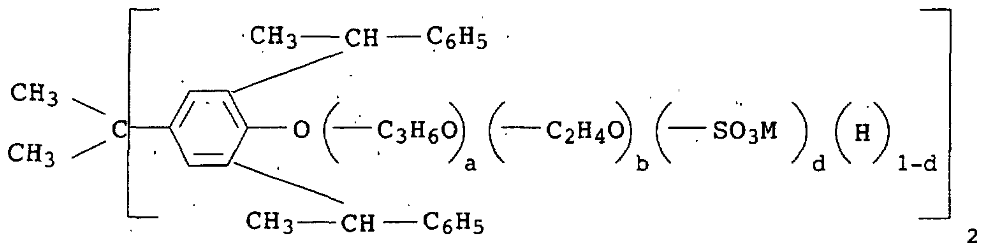

(III)

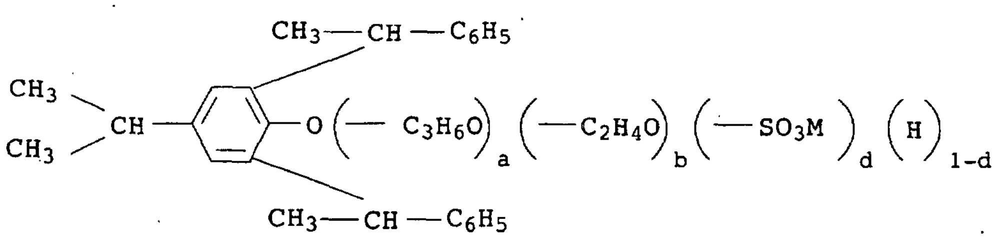

(IV),

a is from 0 to on average 125,

b is on average from 37 to 250, the ratio b:a being at least 1:1 when b > 37,

d is 0 or 1, and

M is an alkali metal,

or mixtures thereof,
from 10 to 90% by weight of a mono- or polyhydric alcohol or mixtures thereof and optionally water,
but excluding dye preparations whose liquid medium is exclusively water and polyalkylene glycol if they include a dispersant based on an arylsulfonic acid formaldehyde condensation product.

2. Dye preparations as claimed in claim 1, comprising, based on the weight of the preparation, from 1 to 15% by weight of one or more dyes selected from the class of the anthraquinones or quinophthalones and from 0.5 to 10% by weight of dispersant.

3. Dye preparations as claimed in claim 1, wherein the mono- or polyhydric alcohol is an alkane monool or polyol having from 2 to 8 carbon atoms and up to 4 alcoholic hydroxyl groups.

4. Dye preparations as claimed in claim 1, wherein 99% of the dye particles are smaller than 1 µm.

**5.** Dye preparations as claimed in claim 1, comprising anthraquinone dyes of the formula I

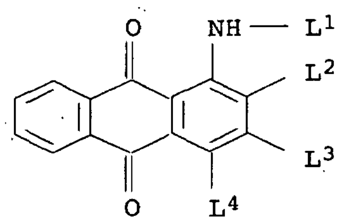

(I)

where

$L^1$ is hydrogen, $C_1$-$C_{10}$-alkyl or unsubstituted or $C_1$-$C_4$-alkyl-, $C_1$-$C_4$-alkoxy-, halogen- or nitro-substituted phenyl,

$L^2$ and $L^3$ are independently of each other hydrogen, unsubstituted or phenyl- or $C_1$-$C_4$-alkylphenyl-substituted $C_1$-$C_{10}$-alkoxy, unsubstituted or phenyl-substituted $C_1$-$C_{10}$-alkylthio, halogen, hydroxyphenyl, $C_1$-$C_4$-alkoxyphenyl, $C_1$-$C_6$-alkanoyl, $C_1$-$C_6$-alkoxycarbonyl or a radical of the formula

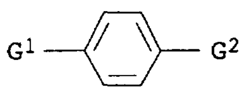

,

where $G^1$ is oxygen or sulfur and $G^2$ is hydrogen or mono-$C_1$-$C_8$-alkylsulfamoyl whose alkyl chain is with or without interruption by 1 or 2 oxygen atoms in ether function, and

$L^4$ is unsubstituted or phenyl- or $C_1$-$C_4$-alkylphenyl-substituted amino, hydroxyl or unsubstituted or phenyl-substituted $C_1$-$C_{10}$-alkylthio.

**6.** Dye preparations as claimed in claim 1, comprising quinophthalone dyes of the formula II

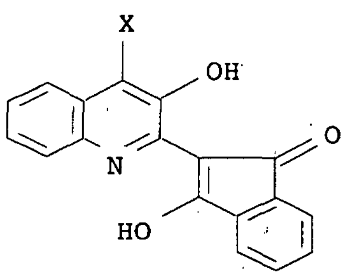

(II)

where
X is hydrogen, chlorine or bromine.

**7.** The use of the dye preparations of claim 1 as inks in the inkjet process.

**8.** The use of the dye preparations of claim 1 as inks in sublimation transfer printing.

**Revendications**

**1.** Compositions de colorants, contenant, à chaque fois par rapport au poids de la composition, 0,1 à 30% en poids d'un ou de plusieurs colorants de la classe des anthraquinones ou des quinophtalones, qui sont exemptes de groupes ioniques, 0,1 à 20% en poids d'un dispersant à base d'un produit de condensation d'acide arlsulfonique et de formaldéhyde, qui présente une teneur de 3 à 50% en poids, par rapport au poids du dispersant, en un ou

plusieurs acides carboxyliques aromatiques ou aliphatiques à longue chaîne, leurs sels, leurs anhydrides ou un mélange de ceux-ci, ou 0,1 à 20% en poids d'un dispersant soluble dans l'eau à base de phénols oxalkylés de formule III ou IV,

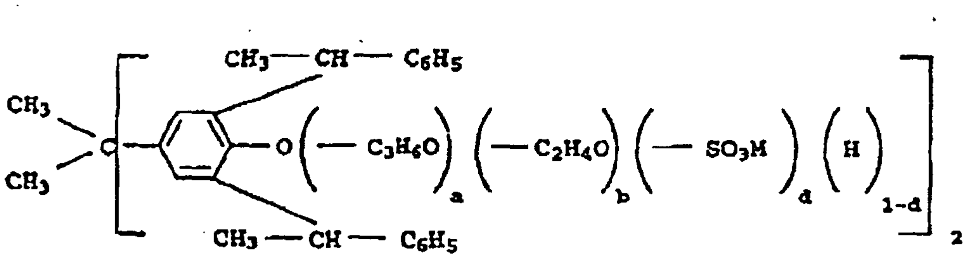

(III)

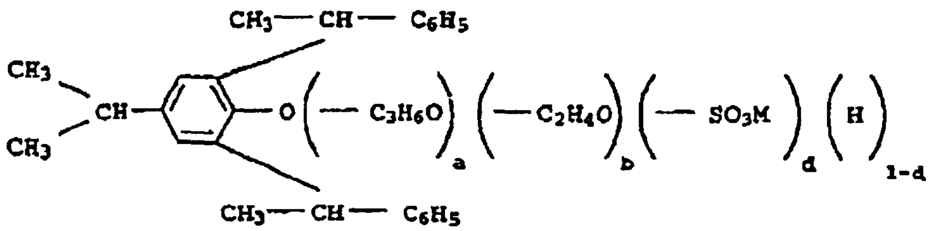

(IV),

dans lesquelles
a signifie 0 à en moyenne 125,
b signifie en moyenne 37 à 250, dans le cas où b>37, le rapport b:a étant d'au moins 1:1,
d signifie 0 ou 1 et
M signifie un métal alcalin
ou leurs mélanges,
10 à 90% en poids d'un alcool monovalent ou polyvalent ou leurs mélanges et le cas échéant de l'eau,
à l'exception des compositions de colorants qui contiennent exclusivement de l'eau et un polyalkylèneglycol comme milieu liquide, pour autant qu'elles présentent un dispersant à base d'un produit de condensation d'acide arylsulfonique et de formaldéhyde.

2. Compositions de colorants selon la revendication 1, **caractérisées en ce qu'**elles contiennent 1 à 15% en poids d'un ou de plusieurs colorants de la classe des anthraquinones ou des quinophtalones et 0,5 à 10% en poids de dispersant, à chaque fois par rapport au poids de la composition.

3. Compositions de colorants selon la revendication 1, **caractérisées en ce qu'**elles contiennent un alcanemonool ou un alcanepolyol comprenant 2 à 8 atomes de carbone et jusqu'à 4 groupes hydroxy alcooliques comme alcool monovalent ou polyvalent.

4. Compositions de colorants selon la revendication 1, **caractérisées en ce que** 99% des particules de colorant contenues dans la composition est inférieur à 1 µm.

5. Préparations de colorants selon la revendication 1, **caractérisées en ce qu'**elles contiennent des colorants d'anthraquinone de formule I

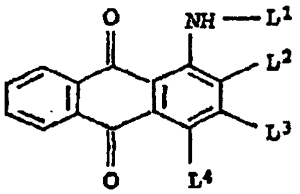

(I)

dans laquelle

$L^1$ signifie un atome d'hydrogène, un groupe alkyle en $C_1$ à $C_{10}$ ou un groupe phényle le cas échéant substitué par un groupe alkyle en $C_1$ à $C_4$, alcoxy en $C_1$ à $C_4$, un atome d'halogène ou un groupe nitro,

$L^2$ et $L^3$ signifient, indépendamment l'un de l'autre, à chaque fois un atome d'hydrogène, un groupe alcoxy en $C_1$ à $C_{10}$, le cas échéant substitué par un groupe phényle ou un groupe (alkyle en $C_1$ à $C_4$)phényle, un groupe (alkyle en $C_1$ à $C_{10}$)thio le cas échéant substitué par un groupe phényle, un atome d'halogène, un groupe hydroxyphényle, (alcoxy en $C_1$ à $C_4$) phényle, alcanoyle en $C_1$ à $C_6$, (alcoxy en $C_1$ à $C_6$)carbonyle ou un radical de formule

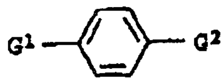

,

dans laquelle $G^1$ représente un atome d'oxygène ou de soufre et $G^2$ un atome d'hydrogène ou un groupe mono(alkyl en $C_1$ à $C_8$)sulfamoyle, dont la chaîne alkyle peut être interrompue par 1 ou 2 atomes d'oxygène à fonction éther, et

$L^4$ signifie un groupe amino le cas échéant substitué par un groupe phényle ou (alkyle en $C_1$ à $C_4$) phényle, un groupe hydroxy ou un groupe (alkyle en $C_1$ à $C_{10}$)thio le cas échéant substitué par un groupe phényle.

**6.** Compositions de colorants selon la revendication 1, **caractérisées en ce qu'**elles contiennent les colorants de quinophtalone de formule II

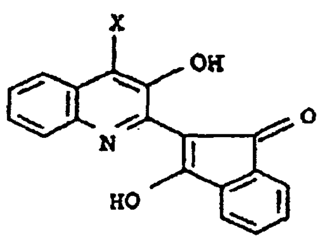

(II) .

dans laquelle X représente un atome d'hydrogène, de chlore ou de brome.

**7.** Utilisation des compositions de colorants selon la revendication 1 comme encres dans des procédés à jet d'encre.

**8.** Utilisation des compositions de colorants selon la revendication 1 comme encres dans les procédés de transfert-sublimation.